# EUROPEAN PATENT APPLICATION

(11) **EP 4 756 625 A1**
(43) Date of publication of application: **10.06.2026**
(21) Application number: 24307021.6
(22) Date of filing: 04.12.2024
(51) Int. Cl.: G06F 11/30

(54) **A METHOD AND A DEVICE FOR DETERMINING CARBON FOOTPRINT OF A TO-BE-DEPLOYED CLOUD APPLICATION**

(71) Applicant: THALES DIS FRANCE SAS, 92190 Meudon (FR)
(72) Inventor: FULOP, Patrick, 75008 Paris (FR)
(74) Representative: Grevin, Emmanuel

(57) **Abstract**

Embodiments of the present disclosure relates to a device and a method for determining carbon footprint of a to-be-deployed cloud application. The method comprises the steps of extracting a topology of an intended cloud infrastructure required by the to-be-deployed cloud application and determining one or more elements in real-time from the topology of the to-be-deployed cloud application. The method also comprises the steps of determining electrical consumption for each of the one or more elements of the to-be-deployed cloud application and determining a total electrical consumption of the to-be-deployed cloud application based on the electrical consumption of each of the one or more éléments. The method further comprises the step of determining an electrical consumption efficiency rating of the to-be-deployed cloud application based on the total electrical consumption.

## Description

### Field of the invention

The present disclosure relates to cloud computing. More particularly, the embodiments of the present disclosure relate to a method and a device for determining carbon footprint of a cloud application.

### Background of the invention

Amongst other factors, electricity consumption by electrical/electric appliances has become a major concern which eventually contributes to global warming of our planet, Earth. To handle the situation of the global warming, several companies have taken various initiatives to reduce the carbon footprint of these electrical/electric appliances.

One such initiative is the green cloud computing which focuses on reducing the energy consumption and infrastructure footprint by cloud applications deployed in a cloud infrastructure. Recently, the cloud industry has developed a discipline to optimize the carbon footprint of the cloud applications. This generally evolves on par with financial cost, as there is a cost link for the cloud vendors. In order words, higher the carbon footprint of a cloud application, higher is the financial cost for operating such cloud application.

However, with the existing green cloud computing, the calculation for carbon footprint of the cloud application is only available once the cloud application is already deployed in the cloud infrastructure. Further, an owner of the cloud application doesn't have a simple way to deduct efficiency of its future deployment, as multiple layers of calculations and variables are at stake. Deploying the cloud infrastructure within two different cloud regions (of the same cloud provider) provide various results depending on energy mix from selected regions and even from the weather season of that region.

Moreover, the problem for a public cloud application owner is that it is cumbersome to guess the efficiency of its cloud infrastructure, as it is observed once deployed or too complex, thus carbon footprint optimization is complex.

Therefore, there is a need for an improved solution which offers determination of carbon footprint of a cloud application before deployment. There is also a need for an improved and easy solution for calculating electrical consumption of an intended cloud infrastructure needed for a to-be-deployed cloud application.

### Summary of the Invention

In some exemplary embodiments, a method is provided for determining electrical consumption of a to-be-deployed cloud application. The method comprises the steps of extracting a topology of an intended cloud infrastructure required by the to-be-deployed cloud application and determining one or more elements in real-time from the topology of the to-be-deployed cloud application. The method also comprises the step of. The method also comprises the steps of determining electrical consumption for each of the one or more elements of the to-be-deployed cloud application and determining a total electrical consumption of the to-be-deployed cloud application based on the electrical consumption of each of the one or more elements. The method further comprises the step of determining an electrical consumption efficiency rating of the to-be-deployed cloud application based on the total electrical consumption.

In some exemplary embodiments, the infrastructure as a code (IaC) script is optimized in real-time based on the total electrical consumption of the to-be-deployed cloud application.

In some exemplary embodiments, an eco-score ranking is determined for at least one of the one or more elements and the to-be-deployed cloud application.

In some exemplary embodiments, the eco-score ranking comprises a first rank A, a second rank B, a third rank C, a fourth rank D, a fifth rank E and a sixth rank F.

In some exemplary embodiments, carbon footprint or CO2 emission is determined based on at least one of the electrical consumption for each of the one or more elements of the to-be-deployed application and the total electrical consumption of the to-be-deployed cloud application.

In some exemplary embodiments, at least one of the eco-score ranking, the electrical consumption for each of the one or more elements and the total electrical consumption of the to-be-deployed cloud application is displayed on a user interface.

In some exemplary embodiments, the total electrical consumption of the to-be-deployed cloud application is determined for a time-period.

In some exemplary embodiments, the electrical consumption efficiency rating corresponds to an efficiency of the one or more elements in regard to electricity usage versus calculation power.

In some exemplary embodiments, a device for determining electrical consumption of a to-be-deployed cloud application. The device comprises a processor and a memory communicatively coupled to the processor. The memory stores processor instructions, which when executed by the processor cause the processor to extract a topology of an intended cloud infrastructure required by the to-be-deployed cloud application; determine one or more elements in real-time from the topology of the to-be-deployed cloud application; determine electrical consumption for each of the one or more elements of the to-be-deployed cloud application ; determine a total electrical consumption of the to-be-deployed cloud application based on the electrical consumption of each of the one or more elements; and determine an electrical consumption efficiency rating of the to-be-deployed cloud application based on the total electrical consumption.

In some exemplary embodiments, the processor is configured to optimize the infrastructure as a code (IaC) script in real-time based on the total electrical consumption of the to-be-deployed cloud application.

In some exemplary embodiments, the processor is configured to determine an eco-score ranking for at least one of the one or more elements and the to-be-deployed cloud application.

In some exemplary embodiments, the processor is configured to determine carbon footprint or CO2 emission based on at least one of the electrical consumption for each of the one or more elements of the to-be-deployed application and the total electrical consumption of the to-be-deployed cloud application.

In some exemplary embodiments, the processor is configured to display at least one of the eco-score ranking, the electrical consumption for each of the one or more elements and the total electrical consumption of the to-be-deployed cloud application on a user interface.

In some exemplary embodiments, a non-transitory computer-readable medium storing computer-executable instructions for determining electrical consumption of a to-be-deployed cloud application. The computer-executable instructions configured for extracting a topology of an intended cloud infrastructure required by the to-be-deployed cloud application. The computer-executable instructions configured for determining one or more elements in real-time from the topology of the to-be-deployed cloud application. The computer-executable instructions configured for determining electrical consumption for each of the one or more elements of the to-be-deployed cloud application. The computer-executable instructions configured for determining a total electrical consumption of the to-be-deployed cloud application based on the electrical consumption of each of the one or more éléments. The computer-executable instructions configured for determining an electrical consumption efficiency rating of the to-be-deployed cloud application based on the total electrical consumption.

### Brief description of the drawings

Figure 1 illustrates an exemplary system architecture for determining carbon footprint of a to-be-deployed cloud application, in accordance with an exemplary embodiment of the present disclosure,
Figure 2 illustrates an exemplary method flow diagram for determining carbon footprint of a to-be-deployed cloud application, in accordance with an exemplary embodiment of the present disclosure, and
Figure 3 depicts a block diagram of a server and/or a device, in accordance with an exemplary embodiment of the present disclosure.

### Detailed description

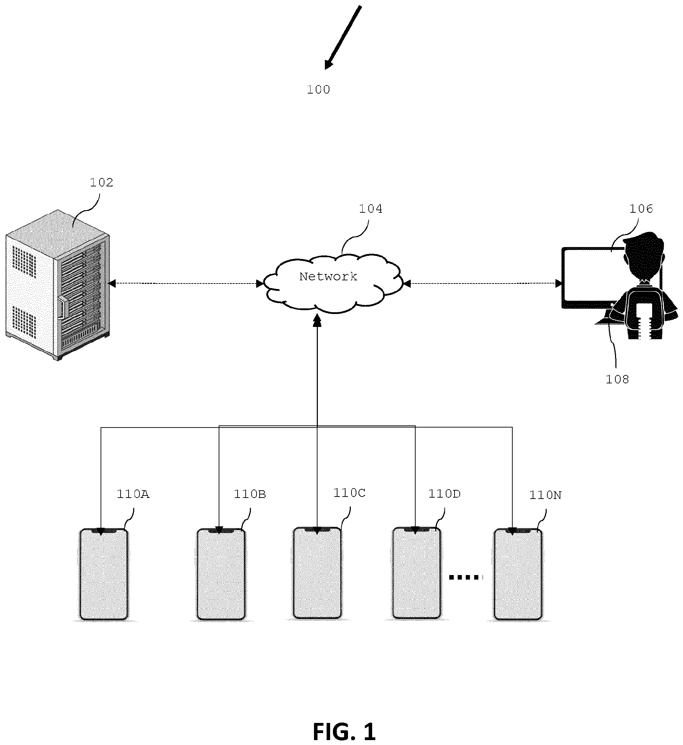

Figure 1 depicts an exemplary system architecture 100 in accordance with an exemplary embodiment of the present disclosure. The system architecture 100 comprises, but is not limited to, a server 102 connected to a device 106 through a network 104.

As used herein, the term "server" may refer to a physical server in a data center or a cloud server running in a cloud computing environment and possessing the capabilities of performing the operations or procedures as described herein.

As used herein, the term "device" may refer to a smart device, a cellular device, a mobile phone, a smart watch, a tablet, a personal digital assistance, a laptop, a personal /desktop computer, a television, or any such device that is obvious to a person skilled in the art.

As used herein, the term "network" may refer to a wired network or a wireless network. The wired network generally requires cables, ethernet or wires to connect the device 106 with the network 104. The wireless network enables the device 106 to get wirelessly connected with the network 104. Examples of such wireless network includes, but is not limited to, a cellular network (such as GSM network, CDMA Network or any other telecommunication mobile network) or a short-range network (WiFi network, Near-field communication (NFC), a ZigBee network, a bluetooth network etc.).

Further, the device 106 is associated with a user 108 who is using the device 106 for various purposes as described herein. For an instance, the user 108 wants to deploy a cloud application for which the user 108 needs a cloud infrastructure to implement/operate the cloud application.

As an example, the user 108 wants to remotely run an advance over-the-air (OTA) campaign on one or more mobile devices 110A-110N. Although, it is depicted in Figure 1 that the one or more mobile devices (110A-110N) and the device 106 are connected to the same network 104; however, it is understood for a person skilled in the art that one or more mobile devices (110A-110N) and the device 106 can be connected to different networks.

Each of these one or more mobile devices 110A-110N comprises an embedded subscriber identity module (referred hereinafter as "eSIM") belonging to any mobile network operator (referred hereinafter as "MNO"). For running the advance OTA campaign, the user 108 may use the device 106 to access cloud tool/s to first build the intended cloud infrastructure to implement the cloud application for running the advance OTA campaign. Such cloud tool/s are hosted by the server 102. The server 102 may offer different features to the user 108 based on a subscription of the cloud tool/s opted by the user 108. One such feature may be building cloud infrastructure for deploying cloud applications through the cloud tool/s. Some of the cloud tool/s may include, but is not limited to, IBM's Terraform, Google Cloud Platform, Microsoft Azure, Amazon's AWS etc.

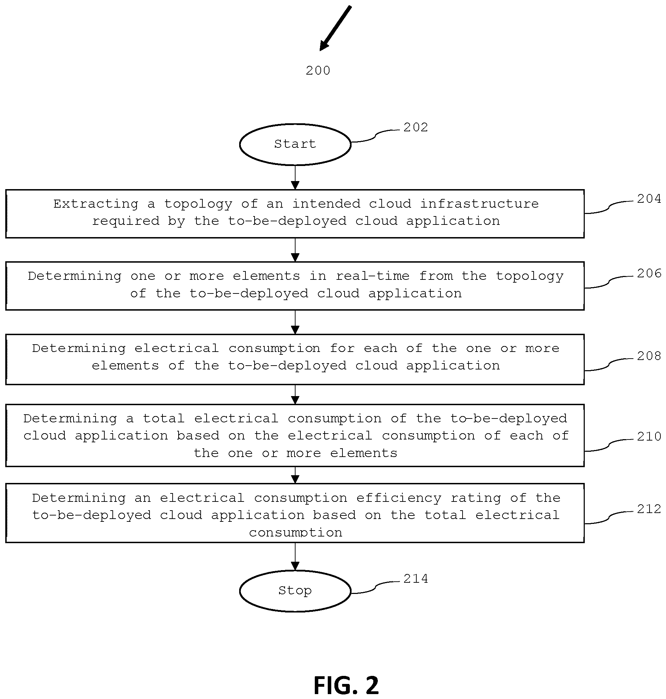

The device 106 comprises a display or user interface for rendering the cloud tool/s to the user 108. By using the cloud tool/s, the user 108 starts writing an Infrastructure as a Code (referred hereinafter as "IaC") script for building the intended cloud infrastructure to implement or deploy the cloud application for running the advance OTA campaign. As an example, the user 108 writes the following IaC script provided in exemplary Table 1 below. How this IaC script is analyzed to determine the electrical consumption and/or caron footprint of the cloud application before deployment is explained in Figure 2 below.

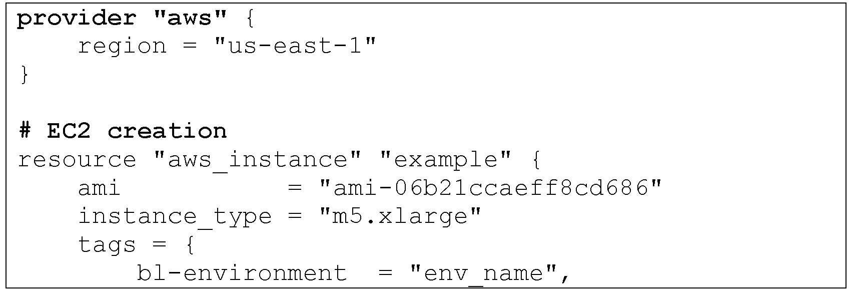

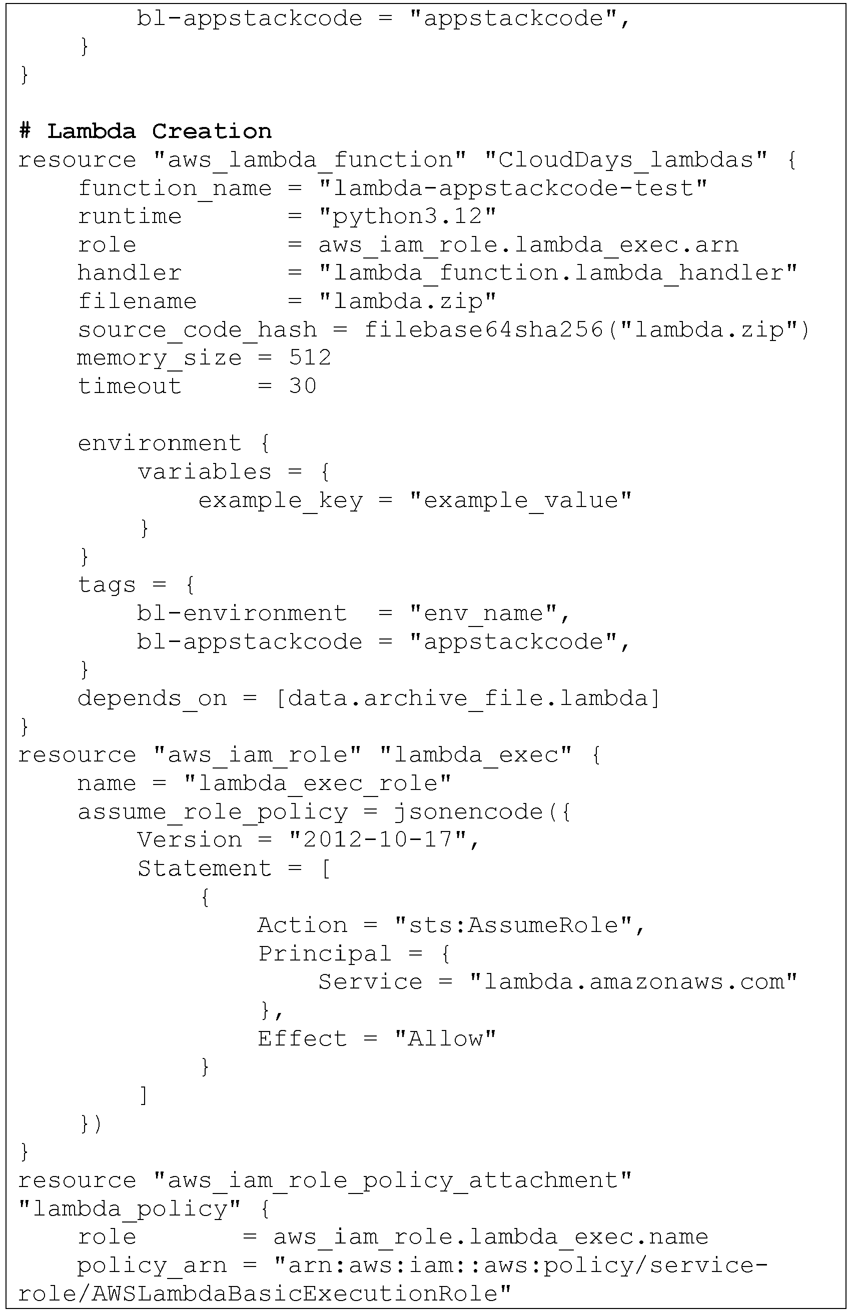

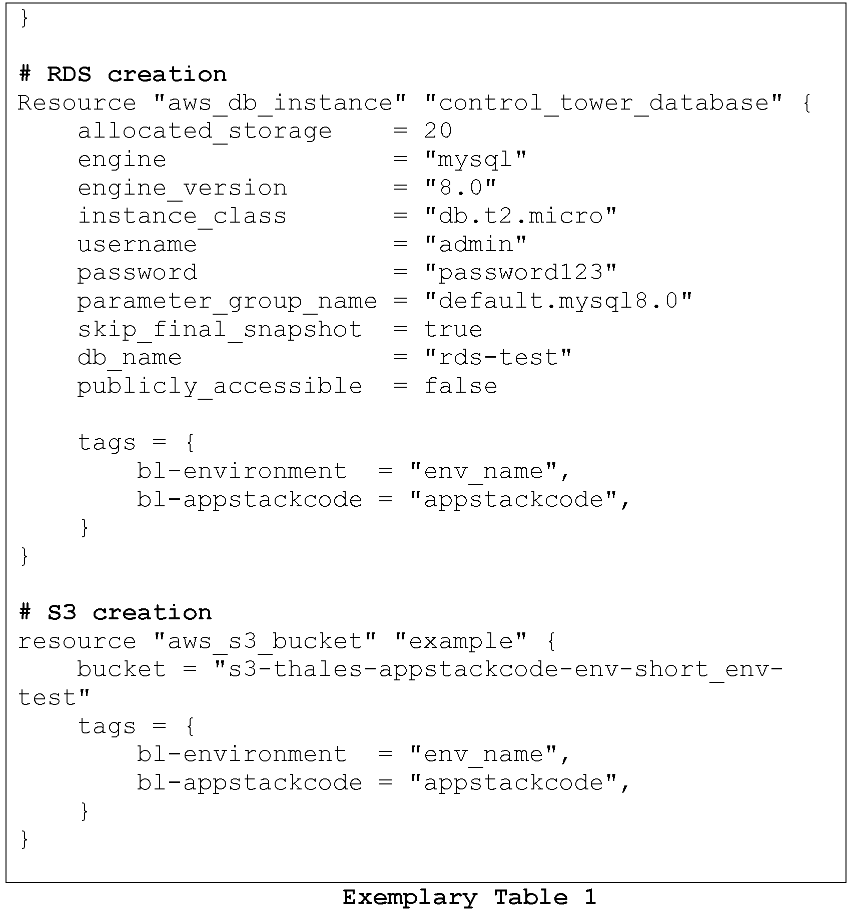

Figure 2 depicts an exemplary method flow diagram 200 for determining electrical consumption of a to-be-deployed cloud application, in accordance with an exemplary embodiment of the present disclosure. At step 202, the method flow diagram 200 starts.

As used herein, the term "to-be-deployed cloud application" may refer to a cloud application which is still under development or fully developed but not yet deployed and yet to be deployed in future.

At step 204, a processing engine may work in conjunction with the cloud tool/s and/or a processor of the device 106. The processing engine may extract a topology of an intended cloud infrastructure required by the to-be-deployed cloud application. Such topology of the intended cloud infrastructure may be extracted recursively from the IaC script due to its binary tree typical structure. As an example, "region" in the provider "aws", EC2 creation, Lambda Creation, RDS creation and the S3 creation are extracted as a topology of the IaC script mentioned in exemplary Table 1 above.

As used herein, the term "region" may refer a separate geographic area. "Region" may comprise multiple, physically separated and isolated availability zones that are connected with low latency, high throughput, highly redundant networking. Such availability zones may enable the user 108 to operate production applications and databases that are more highly available, fault tolerant, and scalable than possible when using a single data center.

As used herein, the term "topology" may refer to a structure, generally in the form of a binary tree of a software code, IaC.

At step 206, the processing engine may determine one or more elements in real-time from the topology of the to-be-deployed cloud application. As an example, "instance_type" in the E2C creation, "memory_size" in the Lambda Creation, "instance_class" as well as "allocated_storage" in RDS creation and "resource" in the S3 creation are elements from the topology of the IaC script of the to-be-deployed cloud application. These elements are defining the structure and sizing of the cloud infrastructure that will be deployed by the cloud provider.

As used herein, the term "element" may refer to one or more functions defined in the topology of the software, corresponding to attributes of the requested cloud infrastructure workloads.

Herein, the element "instance_type" mentions "m5.xlarge" as an example. This "m5.xlarge" means that the to-be-deployed cloud application virtual machine needs 4 virtual Central Processing Unit (referred hereinafter as "vCPU") and 16 gigabyte memory (referred hereinafter as "GiB"). Depending the upon the need for implementing the to-be-deployed cloud application, the user 108 may specify this "instance_type" according to the estimated need of number of vCPU and memory for this

| **Column A** | **Column B** | **Column C** | **Column D** | **Column E** |
|---|---|---|---|---|
| **Region** | **Elements** | **Size** | **Electrical consumption (in kWh)** | **Carbon footprint (in CO2eq/kWh)** |
| US East | "EC2" of "instance _type" | "m5.xlarge " - 4 vCPUs and 16 GiB | Estimated to 20 Watts (W) at 80% of CPU usage, thus 0,02 kWh per hour | 360g CO2eq/kWh during the day on average, so 7,2g CO2eq per hour |
| US East | "Lambda" of "memory_s ize" | 512 GiB | Estimated to 2W, thus 0,002 kWh per hour of usage | 360g CO2eq/kWh during the day on average, so |
| | | | | 0,72g CO2eq per hour |
| US East | "RDS" of "allocate d_storage " | 20 GiB | Estimated to 2W, thus 0,002 kWh per hour | 360g CO2eq/kWh during the day on average, so 0,72g CO2eq per hour |
| US East | "S3 bucket" of "resource " | "aws_s3_bu cket" | Estimated to 0,2W, thus 0,0002 kWh per hour | 360g CO2eq/kWh during the day on average, so 0,072g CO2eq per hour |

| | | | | |
|---|---|---|---|---|
| usage. | | | | |

### Exemplary Table 2

The element "memory_size" of 512 GiB in the Lambda Creation also mentions the memory needed to implement the to-be-deployed cloud application. Such lambda creation function is a serverless service that runs the code in response to events and automatically manages the underlying compute resources.

The element "allocated_storage" of 20 GiB in the RDS creation mentions the storage for storing the to-be-deployed cloud application.

The element "resource" of "aws_s3_bucket" in the S3 creation refers to a simple storage service offered by AWS for storing any number of objects in a bucket.

At step 208, the processing engine may determine electrical consumption for each of the one or more elements of the to-be-deployed cloud application. Each element herein may consume electricity based on the one or more elements specified in the IaC script. Depending upon the region, the carbon footprint associated with electricity consumption by each element may vary depending on local energy mix and cloud provider sourcing.

At step 210, the processing engine may determine a total electrical consumption of the to-be-deployed cloud application based on the electrical consumption of each of the one or more elements. For this, the total electrical consumption may be calculated by summing up or adding the electrical consumption of each of the one or more elements. Column D in the exemplary Table 2 above mentions the electricity consumption by each element and adding all of these electrical consumptions determines the total electrical consumption estimated.

In some exemplary embodiments, the total electrical consumption of the to-be-deployed cloud application is determined for a particular time-period. For an instance, such time period may be for a single day, a few days, a week, several weeks, months or for a year.

At step 212, the processing engine may determine an electrical consumption efficiency rating of the to-be-deployed cloud application based on the total electrical consumption.Herein, the electrical consumption efficiency rating may correspond to an efficiency of the one or more elements in regard to electricity usage versus computation power, which varies a lot depending on the type of cloud workloads and their evolution over time.

As an example, an AWS VM (virtual machine) managing an Apache web server spends much more energy that an AWS S3 bucket with web hosting capability, for the same final activity as seen by the user 108 of a web hosting service. To save energy and if the usage is the same, it may be recommended to prefer a S3 bucket with web hosting capability over a complete VM with an Apache web server.

At step 214, the method flow diagram 200 ends.

In some exemplary embodiments, the processing engine of the present disclosure may be an automated expert system. For the calculation of the step 202 to step 214, such automated expert system utilizes one or more deductive rules to transform the elements from the IaC script to define the infrastructure for the deployment. These one or more deductive rules may be defined by the user 108 or any expert/technician/subject matter expert of the overall cloud operations. Such expert may possess deep knowledge of the elements and the electrical consumption by such element in the cloud environment and based on the region. Such expert may also redefine or modify the one or more deductive rules from time-to-time depending upon the evolution of the cloud environment and the electrical consumption defined for the region.

In some exemplary embodiments, the processing engine of the present disclosure may be a software which work in conjunction with the device 106 via which the cloud tool/s is accessed by the user 108. As an example, the processing engine may work as a plug-in with the cloud tool/s. As an example, the processing engine may work as a computer-readable medium storing computer-executable instructions in a device such as a pen drive or a universal serial bus (USB) to be connected with the device 106. Alternatively, the processing engine of the present disclosure may be a dedicated hardware in the form of a micro-chip or nano chip or a processor of the device 106.

In some other alternate embodiments, the processing engine of the present disclosure may employ artificial intelligence or machine learning techniques on top of calculation rules, to extract the topology, determine the one or more elements, and determine electrical consumption for such elements. For an example, the processing engine may be fed with some topologies of example IaC scripts so that the processing engine may learn about the topologies of IaC scripts. Similarly, the processing engine may be fed with some elements of example IaC scripts so that the processing engine may learn about the elements of IaC scripts. And in the same manner, the processing engine may be fed with electrical consumption by such elements of example IaC scripts in any region of this cloud provider so that the processing engine may learn about the electrical consumption by these elements of IaC scripts.

Based on at least one of the electrical consumption for each of the one or more elements and the total electrical consumption of the to-be-deployed cloud application, the processing engine may further determine the carbon footprint or CO2 emission by the to-be-deployed cloud application. In some exemplary embodiments, the following formula may be used. Output value in (Kg of CO2) = Input value (in KWh/Yr) X 0.85 (Emission Factor of the specific region)

Column E in the exemplary Table 2 above mentions the resulting carbon footprint by each element and adding all of these resulting carbon footprints determines the total resulting carbon footprint. The resulting carbon footprint depends on the timing of usage, the season, the location/region and sourcing contracts from the cloud provider and are specific for each region. In some exemplary embodiments, data from external provider subscription (such as electricitymaps.com) may also be used to calculate the emission factor.

The present disclosure also encompasses the feature of determining an eco-score ranking for at least one of the one or more elements and the to-be-deployed cloud application. The eco-score ranking may comprise a first rank A, a second rank B, a third rank C, a fourth rank D, a fifth rank E and a sixth rank F.

In some exemplary embodiments, the first rank A refers to no or very limited electricity consumption in the range of 0 to 0,0001 (Kilowatt hours, KWh) and thus, represented with dark green color. The second rank B refers to very low electricity consumption in the range of 0,0001kWh to 0, 001 kWh and thus, represented with green color. The third rank C refers to low electricity consumption in the range of 0,001 kWh to 0,01 kWh and thus, represented with light green color. The fourth rank D refers to average electricity consumption in the range of 0,01 kWh to 0,1 kWh and thus, represented with yellow color. The fifth rank E refers to high electricity consumption in the range of 0,1 kWh to 1 kWh and thus, represented with orange color. The sixth rank F refers to high electricity consumption in the range of 1 kWh to 10 kWh and thus, represented with red color. Such color representation for the eco-score ranking for the first rank A, the second rank B, the third rank C, the fourth rank D, the fifth rank E and the sixth rank F may be for an estimated usage of one hour.

In some exemplary embodiments, the first rank A refers to the cloud application/s based on serverless technology in a public cloud. In some exemplary embodiments, the second rank B refers to a container technology in the public cloud. In some exemplary embodiments, the third rank C refers to a virtual machine with ARM architecture in the public cloud. In some exemplary embodiments, the fourth rank D refers to a standard virtual machine in a private cloud. In some exemplary embodiments, the fifth rank E refers to barebone servers in the public cloud. In some exemplary embodiments, the sixth rank F refers to the cloud application/s based on reserved barebone servers in the private cloud.

In some exemplary embodiments, the eco-score ranking and/or the electrical consumption for at least one of the one or more elements and the to-be-deployed cloud application may be displayed on the user interface for the user 108 and even for an end-consumer.

The present disclosure further encompasses the feature of optimizing the IaC script in real-time based on the total electrical consumption of the to-be-deployed cloud application. As an example, the user 108 may optimize the IaC code depending upon the total electrical consumption or also on the electrical consumption for each of the one or more elements of the to-be-deployed cloud application. For an instance, the user 108 may choose to change the size of the elements to optimize the IaC script. The recursive nature of calculation applied to IaC script allows to efficiently recalculate the gap with a limited calculation to a concerned element in the IaC script, which allows energy savings in the process of optimization.

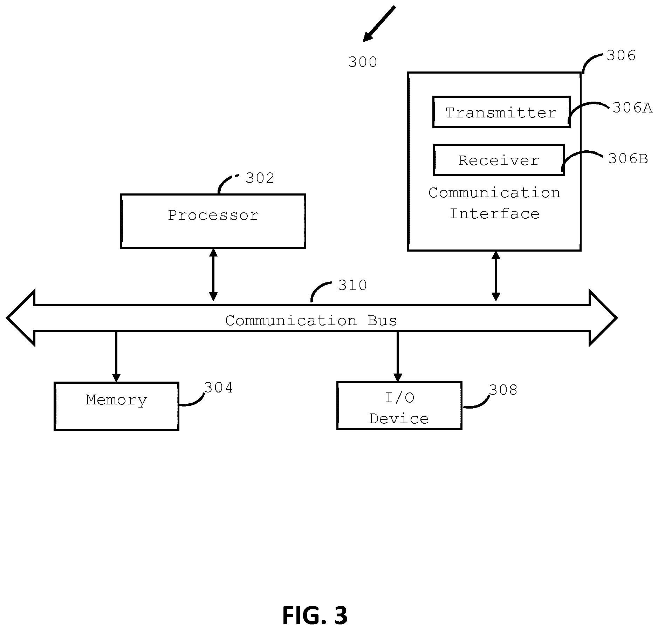

Figure 3 depicts a block diagram of the server 102 and/or the device 106, in accordance with an exemplary embodiment of the present disclosure. The server 102 and/or the device 106 may include processor 302, memory 304, a communication interface 306, and input/output devices 308. Each of these components may be operatively coupled to a communication bus 310, which may be configured, e.g., for optical and/or electrical communication.

The processor 302 may include a central processing unit, application-specific integrated circuit (ASIC), digital signal processor (DSP), or another type of processing circuit. The processor 302 may be implemented using mainframe, distributed processor, multi-core, parallel, grid, or other architectures. The processor 302 may be configured to implement the functions, procedures, and/or methods proposed by the present invention as described in the above Figures. Further, layers of a wireless interface protocol may be implemented by the processor 302.

The processing engine of Figure 2 may be a software that may be work in conjunction with the processor 302. In a first exemplary embodiment, the processing engine reside inside the processor 302. In a second exemplary embodiment, the processing engine reside outside the processor 302.

The memory 304 may be any suitable medium that participates in providing instructions to the processor 302 for execution. For example, the memory 304 may be non-transitory or non-volatile medium, such as a magnetic disk or solid-state non-volatile memory or volatile medium such as random-access memory (RAM). The instructions or modules stored on memory 304 may include machine-readable instructions executed by the processor 302 that cause the processor 302 to perform the methods and functions as described herein.

In some exemplary embodiments, the device 106 for determining electrical consumption of a to-be-deployed cloud application. The device 106 comprises the processor 302 and a memory 304 communicatively coupled to the processor 302. The memory 304 stores processor instructions, which when executed by the processor 302 cause the processor 302 to: extract a topology of an intended cloud infrastructure required by the to-be-deployed cloud application; determine one or more elements in real-time from the topology of the to-be-deployed cloud application; determine electrical consumption for each of the one or more elements of the to-be-deployed cloud application; determine a total electrical consumption of the to-be-deployed cloud application based on the electrical consumption of each of the one or more elements; and determine an electrical consumption efficiency rating of the to-be-deployed cloud application based on the total electrical consumption.

In some exemplary embodiments, the processor 302 is configured to optimize the infrastructure as a code (IaC) script in real-time based on the total electrical consumption of the to-be-deployed cloud application.

In some exemplary embodiments, the processor 302 is configured to determine an eco-score ranking for at least one of the one or more elements and the to-be-deployed cloud application.

In some exemplary embodiments, the processor 302 is configured to determine carbon footprint or CO2 emission based on at least one of the electrical consumption for each of the one or more elements of the to-be-deployed application and the total electrical consumption of the to-be-deployed cloud application.

In some exemplary embodiments, the processor 302 is configured to display at least one of the eco-score ranking, the electrical consumption for each of the one or more elements and the total electrical consumption of the to-be-deployed cloud application on a user interface.

Further, the memory 304 may be communicatively coupled to the processor 302 and store information related to operations of the processing unit 308. The memory 304 may be located inside or outside the processor 302 and may be connected to processing unit 308 through various well-known means.

The communication interface 306 may use any apparatus such as a transceiver or an RF module to communicate with another device or the network 104 such as the Ethernet, a radio access network (RAN), or a wireless local area network (WLAN). In other examples, the communication interface 306 may be a Local Area Network (LAN) interface, a wireless 802.11x interface, a 3G, 4G, 5G, or 6G mobile WAN or a WiMax WAN.

The input/output devices 308 may include one or more input and output devices. The input device may be a keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. The output device may be a printer, fax machine, video display, liquid crystal display (LCD), light-emitting diode (LED), Organic-LED (OLED), Quantum Dot Light Emitting Diode (QLED), Micro LED, Mini-LED, Quantum Dot OLED (QD-OLED), audio speaker, etc.

In some exemplary embodiments, a non-transitory computer-readable medium storing computer-executable instructions for determining electrical consumption of a to-be-deployed cloud application. The computer-executable instructions configured for extracting a topology of an intended cloud infrastructure required by the to-be-deployed cloud application. The computer-executable instructions configured for determining one or more elements in real-time from the topology of the to-be-deployed cloud application. The computer-executable instructions configured for determining electrical consumption for each of the one or more elements of the to-be-deployed cloud application. The computer-executable instructions configured for determining a total electrical consumption of the to-be-deployed cloud application based on the electrical consumption of each of the one or more éléments. The computer-executable instructions configured for determining an electrical consumption efficiency rating of the to-be-deployed cloud application based on the total electrical consumption.

Implementations and all of the functional operations described in this description may be realized in digital electronic circuitry, or in computer software, firmware, or hardware, including the structures disclosed in this description and their structural equivalents, or in combinations of one or more of them.

The foregoing discussion of the disclosure has been presented for purposes of illustration and description. The foregoing is not intended to limit the disclosure to the form or forms disclosed herein. In the foregoing detailed description for example, various features of the disclosure are grouped together in one or more examples, configurations, or aspects for the purpose of streamlining the disclosure. The features of the examples, configurations, or aspects of the disclosure may be combined in alternate examples, configurations, or aspects other than those described above. Hence, the present disclosure and drawings should not be considered in a limiting sense, as it is understood that an invention presented within a disclosure is in no way limited to those examples specifically illustrated.

Accordingly, the above description and any accompanying drawings, illustrations, and figures are intended to be illustrative but not restrictive. The scope of any invention presented within this disclosure should, therefore, be determined not with simple reference to the above description and those examples shown in the figures, but instead should be determined with reference to the pending claims along with their full scope or equivalents.

## Claims

1. A method for determining electrical consumption of a to-be-deployed cloud application, the method comprising the steps of:
- extracting a topology of an intended cloud infrastructure required by the to-be-deployed cloud application;
- determining one or more elements in real-time from the topology of the to-be-deployed cloud application;
- determining electrical consumption for each of the one or more elements of the to-be-deployed cloud application;
- determining a total electrical consumption of the to-be-deployed cloud application based on the electrical consumption of each of the one or more elements; and
- determining an electrical consumption efficiency rating of the to-be-deployed cloud application based on the total electrical consumption.

2. The method according to claim 1, further comprising, optimizing the infrastructure as a code (IaC) script in real-time based on the total electrical consumption of the to-be-deployed cloud application.

3. The method according to any previous claims, further comprising, determining an eco-score ranking for at least one of the one or more elements and the to-be-deployed cloud application.

4. The method according to any previous claims, wherein the eco-score ranking comprises a first rank A, a second rank B, a third rank C, a fourth rank D, a fifth rank E and a sixth rank F.

5. The method according to any previous claims, further comprising, determining carbon footprint or CO2 emission based on at least one of the electrical consumption for each of the one or more elements of the to-be-deployed application and the total electrical consumption of the to-be-deployed cloud application.

6. The method according to any previous claims, further comprising, displaying at least one of the eco-score ranking, the electrical consumption for each of the one or more elements and the total electrical consumption of the to-be-deployed cloud application on a user interface.

7. The method according to any previous claims, wherein the total electrical consumption of the to-be-deployed cloud application is determined for a time-period.

8. The method according to any previous claims, wherein the electrical consumption efficiency rating corresponds to an efficiency of the one or more elements in regard to electricity usage versus calculation power.

9. A device for determining electrical consumption of a to-be-deployed cloud application, the device comprising:
- a processor; and
- a memory communicatively coupled to the processor, wherein the memory stores processor instructions, which when executed by the processor, cause the processor to:
- extract a topology of an intended cloud infrastructure required by the to-be-deployed cloud application;
- determine one or more elements in real-time from the topology of the to-be-deployed cloud application;
- determine electrical consumption for each of the one or more elements of the to-be-deployed cloud application;
- determine a total electrical consumption of the to-be-deployed cloud application based on the electrical consumption of each of the one or more elements; and
- determine an electrical consumption efficiency rating of the to-be-deployed cloud application based on the total electrical consumption.

10. The device according to any previous claims, wherein the processor is configured to optimize the infrastructure as a code (IaC) script in real-time based on the total electrical consumption of the to-be-deployed cloud application.

11. The device according to any previous claims, wherein the processor is configured to determine an eco-score ranking for at least one of the one or more elements and the to-be-deployed cloud application.

12. The device according to any previous claims, wherein the eco-score ranking comprises a first rank A, a second rank B, a third rank C, a fourth rank D, a fifth rank E and a sixth rank F.

13. The device according to any previous claims, wherein the processor is configured to determine carbon footprint or CO2 emission based on at least one of the electrical consumption for each of the one or more elements of the to-be-deployed application and the total electrical consumption of the to-be-deployed cloud application.

14. The device according to any previous claims, wherein the processor is configured to display at least one of the eco-score ranking, the electrical consumption for each of the one or more elements and the total electrical consumption of the to-be-deployed cloud application on a user interface.

15. A non-transitory computer-readable medium storing computer-executable instructions for determining electrical consumption of a to-be-deployed cloud application, the computer-executable instructions configured for:
- extracting a topology of an intended cloud infrastructure required by the to-be-deployed cloud application;
- determining one or more elements in real-time from the topology of the to-be-deployed cloud application;
- determining electrical consumption for each of the one or more elements of the to-be-deployed cloud application;
- determining a total electrical consumption of the to-be-deployed cloud application based on the electrical consumption of each of the one or more elements; and
- determining an electrical consumption efficiency rating of the to-be-deployed cloud application based on the total electrical consumption.
